# EUROPÄISCHE PATENTANMELDUNG

(11) **EP 2 363 628 A2**
(43) Veröffentlichungstag der Anmeldung: **07.09.2011**
(21) Anmeldenummer: 11000601.2
(22) Anmeldetag: 26.01.2011
(51) Int. Cl.: F16L 55/07, F16K 24/06, F24D 19/08

(54) **Kupplungselement zum Verbinden zweier Rohrenden**

(30) Priorität: 06.03.2010 DE 102010010463; 16.04.2010 DE 102010015157
(71) Anmelder: NORMA Germany GmbH, 63277 Maintal (DE)
(72) Erfinder: Bauer, Andreas, 63477 Maintal (DE); Chateau, Jérôme, 57070 Metz (FR)
(74) Vertreter: Knoblauch, Andreas

(57) **Zusammenfassung**

Die Erfindung betrifft ein Kupplungselement (1) zum Verbinden zweier Rohrenden, insbesondere eines Kühlmittelkreislaufs eines Kraftfahrzeugs, mit einem Gehäuse (9), das ein erstes Anschlussende (2) und ein zweites Anschlussende (3) aufweist, zwischen denen ein Verbindungskanal (4) ausgebildet ist, der einen Entlüftungskanal (10) aufweist.

Um eine vollautomatische und vakuumdichte Entlüftung zu ermöglichen, ist ein Durchgang (18) des Entlüftungskanals (10) durch eine hygroskopische Dichtung (21) abgedeckt, wobei in Reihe mit dem Durchgang (18) und der hygroskopischen Dichtung (21) ein Entlüftungsventil (13) mit einem Ventilsitz (15) und einem Ventilelement (14) angeordnet ist, das durch einen Druck im Verbindungskanal (4) vom Ventilsitz (15) abhebbar ist.

## Beschreibung

Die Erfindung betrifft ein Kupplungselement zum Verbinden zweier Rohrenden, insbesondere eines Kühlmittelkreislaufs eines Kraftfahrzeugs, mit einem Gehäuse, das ein erstes Anschlussende und ein zweites Anschlussende aufweist, zwischen denen ein Verbindungskanal ausgebildet ist, der einen Entlüftungskanal aufweist.

Derartige Kupplungselemente werden bei der Herstellung von Leitungssystemen dazu verwendet, einzelne Rohrenden miteinander zu verbinden, aber auch dazu, beispielsweise Abzweigungen auszubilden oder beispielsweise Stellelemente wie Ventile oder verschließbare Öffnungen in das System einzubringen. Unter Rohrenden sind dabei nicht nur Enden starrer Rohre zu verstehen, sondern Enden jedweder Art von Leitungen und beispielsweise auch Anschlussstutzen.

Leitungssysteme, wie beispielsweise ein Kühlmittelkreislauf eines Kraftfahrzeugs, werden häufig mit einer Flüssigkeit gefüllt, wobei in der Regel eine Entlüftung des Systems erforderlich ist. Bei einem Kühlmittelkreislauf eines Kraftfahrzeugs erfolgt die Entlüftung beispielsweise durch Entfernen einer Verschlusskappe von einem Entlüftungskanal, der erst dann wieder verschlossen wird, wenn Kühlwasser aus dem Entlüftungskanal austritt. Durch die Verwendung der Verschlusskappe kann dabei eine vakuumdichte Abdichtung des Entlüftungskanals erfolgen, was insbesondere während eines Befüllvorgangs erforderlich ist, bei dem eine Flüssigkeit angesaugt wird.

Allerdings erfordert die Verwendung einer Verschlusskappe ein Tätigwerden eines Bedieners.

Der Erfindung liegt nun die Aufgabe zugrunde, ein Kupplungselement bereitzustellen, das eine vollautomatische und vakuumdichte Entlüftung ermöglicht.

Erfindungsgemäß wird diese Aufgabe dadurch gelöst, dass ein Durchgang des Entlüftungskanals durch eine hygroskopische Dichtung abgedeckt ist, wobei in Reihe mit der hygroskopischen Dichtung und dem Durchgang ein Entlüftungsventil mit einem Ventilsitz und einem Ventilelement angeordnet ist, das durch einen Druck im Verbindungskanal vom Ventilsitz abhebbar ist.

Unter Durchgang kann dabei eine Öffnung des Entlüftungskanals außerhalb des Verbindungskanals, z.B. in die Umgebung, verstanden werden. Durch die Verwendung einer hygroskopischen Dichtung kann dabei sichergestellt werden, dass zwar eine Entlüftung erfolgen kann, aber die Flüssigkeit nicht entweichen kann. Eine hygroskopische Dichtung ist in der Lage, Feuchtigkeit aufzunehmen und gegebenenfalls auch wieder abzugeben. Die hygroskopische Dichtung alleine ermöglicht jedoch keinen vakuumdichten Verschluss des Entlüftungskanals. Unter vakuumdicht ist dabei eine Abdichtung zu verstehen, die einen Aufbau von Unterdruck im Verbindungskanal zulässt, also eine hinreichende Dichtigkeit aufweist. Diese Dichtigkeit wird durch das Entlüftungsventil sichergestellt, wobei dadurch, dass das Ventilelement durch einen Druck im Verbindungskanal vom Ventilsitz abhebbar ist bzw. durch einen Unterdruck an den Ventilsitz angesaugt wird, ein sehr dichter Verschluss durch die Anlage des Ventilelements am Ventilsitz gewährleistet ist. Dadurch ist also der Aufbau von Unterdruck in dem Verbindungskanal möglich, während eine Entlüftung durch Abheben des Ventilsitzes und Entweichen durch die hygroskopische Dichtung gewährleistet ist. Es ist dafür nicht erforderlich, dass ein Bediener tätig wird. Durch die Anordnung des Entlüftungsventils mit der hygroskopischen Dichtung in Reihe, also hintereinander, muss alles, was durch den Entlüftungskanal vom Verbindungskanal entweichen will, sowohl das Entlüftungsventil als auch die hygroskopische Dichtung passieren.

Dabei ist besonders bevorzugt, dass das Ventilelement in Schließrichtung von einer Kraft belastet ist. Zum Beispiel ist das Ventilelement mit einer Federkraft belastet. Dadurch wird das Entlüftungsventil also in einer normal geschlossenen Stellung gehalten. Das Ventilelement kann beispielsweise durch die Schwerkraft nach unten gegen den Ventilsitz gezogen sein. Durch die Verwendung einer Feder, die das Ventilelement in Schließrichtung belastet, können dabei die zum Öffnen des Entlüftungsventils erforderlichen Kräfte, also insbesondere ein erforderlicher Überdruck im Verbindungskanal, relativ genau eingestellt werden. Gleichzeitig erhöht sich durch die Feder die Sicherheit, dass das Ventilelement am Ventilsitz anliegt, was beispielsweise bei Anwendungen vorteilhaft ist, die Vibrationen unterliegen.

Bevorzugterweise ist die hygroskopische Dichtung in einem hohlzylindrischen Einsatz angeordnet, der in einem Stutzen des Gehäuses angeordnet ist. Dadurch ist es nicht erforderlich, das Gehäuse mit hoher Genauigkeit zu fertigen. Es reicht aus, dass die hygroskopische Dichtung im Einsatz relativ genau aufgenommen ist. Der Einsatz kann dann beispielsweise in das Gehäuse eingepresst, eingeschraubt oder verschweißt sein. In einer anderen Ausführungsform ist der Einsatz verschiebbar im Gehäuse angeordnet. Zur Abdichtung zwischen dem Einsatz und dem Gehäuse kann eine zusätzliche Dichtung vorgesehen sein, die beispielsweise an einer Stirnseite des Einsatzes angeordnet ist und bei eingesetztem Einsatz zwischen der Stirnseite und dem Gehäuse angeordnet ist. Die Dichtung kann auch eine Radialdichtung sein. Durch Verschweißen des Einsatzes in das Kupplungsgehäuse kann die zusätzliche Dichtung entfallen.

Dabei ist besonders bevorzugt, dass eine Stirnseite des Einsatzes mit einer Kappe verschlossen ist. Der hohlzylindrische Einsatz ist also auf seiner dem Gehäuse abgewandten Seite mit der Kappe verschlossen. Dadurch wird sichergestellt, dass eine Entlüftung nur durch den Durchgang erfolgt. Vor dem Aufsetzen der Kappe ist aber ein problemloser Einbau der hygroskopischen Dichtung möglich, wobei der Einsatz an dem Ende, mit dem er in das Gehäuse eingesetzt wird, einen nach innen ragenden Flansch aufweisen kann, an dem die hygroskopische Dichtung anliegt. Der Einsatz mit der Dichtung und der Kappe stellen dann eine kompakte und leicht handhabbare Einheit dar.

Vorzugsweise ist die Austrittsöffnung in einer Umfangswand des Einsatzes angeordnet. Die Entlüftung erfolgt also nicht einfach in einer geraden Richtung, sondern es ist eine Richtungsänderung um etwa 90° erforderlich. Das Hindurchtreten von Flüssigkeit wird dadurch erschwert.

Vorzugsweise weist die hygroskopische Dichtung mehrere Dichtscheiben auf. Durch die Verwendung mehrerer Dichtscheiben ist es möglich, die Abmessungen der hygroskopischen Dichtung relativ genau an den Innenraum des hohlzylindrischen Einsatzes anzupassen. Dabei erfolgt durch einen freien Querschnitt der Dichtscheiben eine Verlängerung des Entlüftungskanals.

Vorzugsweise weist der Entlüftungskanal einen Mündungsbereich in den Verbindungskanal auf. Dieser Mündungsbereich kann dabei beispielsweise in Form einer Drosselstelle ausgebildet sein, also einen gegenüber dem anschließenden Entlüftungskanal verringerten Innendurchmesser aufweisen. Dadurch wird die Öffnung zum Verbindungskanal relativ klein gehalten, wodurch ein übermäßiger Austritt von Flüssigkeit verhindert wird. Für eine Entlüftung ist nur eine relativ kleine Öffnung erforderlich.

Vorzugsweise weist das Ventilelement einen Fortsatz auf, der sich durch den Mündungsbereich erstreckt, wobei gegebenenfalls eine Länge des Fortsatzes länger ist als ein Stellweg des Ventilelements. Durch den Fortsatz wird das Ventilelement auch im Mündungsbereich geführt. Dabei verschließt der Fortsatz einen großen Teil des Querschnitts des Mündungsbereichs, so dass insgesamt nur ein relativ geringer offener Querschnitt und damit eine geringe Öffnung des Verbindungskanals erhalten wird. Flüssigkeit kann daher nur in relativ geringen Mengen entweichen, die durch die hygroskopische Dichtung problemlos aufgefangen werden können.

Vorzugsweise weist der Entlüftungskanal einen Führungsbereich auf, wobei der Mündungsbereich einen geringeren Durchmesser aufweist als der Führungsbereich und der Ventilsitz durch eine Stufe zwischen dem Führungsbereich und dem Mündungsbereich gebildet ist. Der Führungsbereich kann dann einen ausreichend großen Durchmesser aufweisen, so dass z.B. eine Bewegung des Ventilelements im Führungsbereich ohne weiteres möglich ist. Durch die Verringerung des Durchmessers im Mündungsbereich wird die Schwächung des Gehäuses und insbesondere eine Öffnung zum Verbindungskanal klein gehalten. Im Hinblick auf das Erzielen einer guten Abdichtung ist dieses vorteilhaft. Durch die Ausbildung des Ventilsitzes durch die Stufe zwischen Führungsbereich und Mündungsbereich kann der Ventilsitz ohne großen Aufwand in das Gehäuse integriert werden. Die Stufe wird dabei durch die Durchmesserverringerung im Mündungsbereich gegenüber dem Durchmesser des Führungsbereichs erzeugt.

Vorteilhafterweise ist das Ventilelement im Führungsbereich geführt. Das Ventilelement kann also einfach in den Führungsbereich des Entlüftungskanals eingelegt werden, wobei es während einer Bewegung durch den Führungsbereich geführt ist. Beispielsweise ist das Ventilelement an Umfangswänden im Führungsbereich radial abgestützt. Durch entsprechende Unregelmäßigkeiten des Ventilelements kann dabei gewährleistet sein, dass eine Entlüftung zwischen Ventilelement und den Umfangsseiten des Führungsbereichs möglich ist. Es ist auch denkbar, das Ventilelement mit so großem Spiel zu fertigen, dass zwischen dem Ventilelement und Umfangsseiten des Führungsbereichs immer ein ausreichender Luftspalt besteht.

Bevorzugterweise ist der Ventilsitz trichterförmig ausgebildet, wobei das Ventilelement insbesondere eine konusförmige Anlagefläche aufweist. Zwischen dem Ventilsitz und dem Ventilelement wird bei Anlage des Ventilelements am Ventilsitz also eine flächige Berührungsfläche erhalten. Dies wirkt sich vorteilhaft auf eine erreichbare Dichtigkeit aus. Die erreichbare Dichtigkeit kann noch dadurch erhöht werden, dass das Ventilelement oder/und das Gehäuse aus einem relativ weichen bzw. elastischen Material hergestellt ist, so dass bei Anlage des Ventilelements am Ventilsitz eine elastische Verformung erfolgt.

Bevorzugterweise bildet eine zweite Stirnseite des Einsatzes einen Anschlag für das Ventilelement. Der Stellweg des Ventilelements in Öffnungsrichtung wird also durch den Einsatz begrenzt. Dadurch ist es möglich, den Entlüftungskanal relativ einfach auszubilden. Gleichzeitig wird der Stellweg durch den Einsatz definiert und ein Verlieren des Ventilelements verhindert.

Vorzugsweise sind die Anschlussenden in einem Winkel größer 0° zueinander angeordnet, insbesondere in einem 90°-Winkel. Dadurch ist eine Montage des Kupplungselements derart möglich, dass das Entlüftungsventil an höchster Stelle angeordnet ist.

Eines der Anschlüssenden kann dabei als Einsteckteil und das andere der Anschlussenden als Aufnahmeteil ausgebildet sein. Dadurch ist eine relativ einfache Verbindung des Kupplungselements mit Rohrenden möglich. Vorzugsweise verläuft der Entlüftungskanal in eine Richtung parallel zu einem der Anschlussenden. Das Einbringen des Entlüftungskanals und des Einsatzes ist dann relativ einfach möglich, indem das Anschlussende festgehalten wird. Die beim Einbringen erforderlichen Kräfte werden dann direkt in das parallel verlaufende Anschlussende übertragen.

Dabei ist bevorzugt, dass der Entlüftungskanal gegenüber dem Anschlussende versetzt ist. Es wird dadurch gewährleistet, dass das Ventilelement, auch wenn der Stößel durch den Entlüftungskanal bis in den Verbindungskanal hineinragt, nicht von der Hauptströmung einer Flüssigkeit im Verbindungskanal angeströmt wird, was zu einem unerwünschten Öffnen des Entlüftungsventils führen könnte. Durch die Versetzung des Entlüftungskanals wird die Sicherheit also verbessert.

Bevorzugterweise bildet die Kappe das Ventilelement. Die Anzahl einzelner Elemente wird damit verringert. Durch eine Bewegung der Kappe gegenüber dem Stutzen des Gehäuses erfolgt dann ein Öffnen oder Schließen des Lüftungsventils. Dadurch ist bereits von außen leicht zu erkennen, ob das Entlüftungsventil geöffnet oder geschlossen ist. Bei dieser Ausführungsform ist der Ventilsitz, der mit dem Ventilelement bzw. der Kappe das Entlüftungsventil bildet, in Strömungsrichtung hinter der hygroskopischen Dichtung und dem Durchgang angeordnet. Aus dem Verbindungskanal durch den Entlüftungskanal ausströmendes Fluid muss also erst die hygroskopische Dichtung und dann das Entlüftungsventil passieren. Dabei ist besonders bevorzugt, dass der Einsatz mit der Kappe verbunden ist und linear bewegbar im Gehäuse angeordnet ist, wobei insbesondere zwischen Einsatz und Gehäuse eine Radialdichtung angeordnet ist. Der Durchgang kann dann beispielsweise in der Verbindungsstelle zwischen Einsatz und Gehäuse ausgebildet sein. Dabei erfolgt durch den Einsatz eine Führung der Kappe bzw. des Ventilelements. Durch die Radialdichtung zwischen Einsatz und Gehäuse wird gewährleistet, dass auch bei einer Bewegung zwischen Einsatz und Gehäuse kein Fluid die hygroskopische Dichtung umgehen kann.

Vorzugsweise ist die Kappe becherförmig mit einem Boden und einer umlaufenden Wand ausgebildet, wobei insbesondere zwischen einer Außenwand des Stutzens und einer Innenseite der Wand eine Ringdichtung angeordnet ist. Die umlaufende Wand der Kappe umgibt dabei den Stutzen des Gehäuses, in dem der Einsatz geführt ist. Der Durchgang wird dabei von der Wand ebenfalls vor Umwelteinflüssen geschützt. Gleichzeitig kann eine Führung der Kappe durch das Zusammenwirken der Wand mit der Außenwand des Stutzens erfolgen.

Vorzugsweise liegt in einer Offenstellung des Ventilelements die Ringdichtung entweder an der Innenseite oder der Außenwand an und in einer Schließstellung sowohl an der Innenseite als auch an der Außenwand. In der Offenstellung des Ventilelements ist die Ringdichtung also ohne Dichtfunktion, während in der Schließstellung des Ventilelements eine zusätzliche Abdichtung erfolgt. In der Schließstellung wird damit ein vakuumdichter Verschluss gewährleistet.

Vorzugsweise sind in der Wand Schlitze ausgebildet, die gegebenenfalls in der Schließstellung durch die Ringdichtung abgedichtet sind. In der Offenstellung sind die Schlitze hingegen nicht durch die Ringdichtung abgedichtet. Durch die Schlitze kann ein kontrolliertes Entweichen von Luft aus dem Entlüftungskanal erfolgen. Gleichzeitig wird durch die Ringdichtung ein vakuumdichtes Verschließen möglich.

Die Erfindung wird im Folgenden anhand bevorzugter Ausführungsbeispiele in Verbindung mit der Zeichnung beschrieben. Hierin zeigen die
- Fig. 1: einen Querschnitt durch ein Kupplungselement mit einem Entlüftungsventil in einer ersten Ausführungsform,
- Fig. 2: einen Querschnitt durch ein Kupplungselement einer zweiten Ausführung mit einem Entlüftungsventil in Schließstellung,
- Fig. 3: das Kupplungselement nach Fig. 2 in räumlicher Darstellung,
- Fig. 4: das Kupplungselement nach Fig. 2 in Offenstellung und
- Fig. 5: das Kupplungsventil nach Fig. 4 in räumlicher Darstellung.

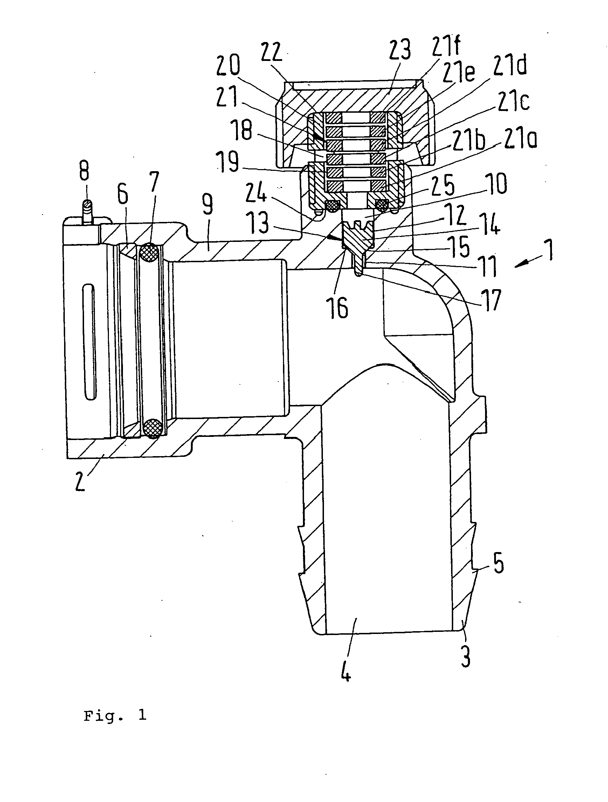

In Fig. 1 ist im Querschnitt ein Kupplungselement 1 dargestellt, das ein erstes Anschlussende 2 und ein zweites Anschlussende 3 aufweist, zwischen denen ein Verbindungskanal 4 ausgebildet ist. Durch das Kupplungselement 1 bzw. durch den Verbindungskanal 4 können also Flüssigkeiten geführt werden. Das Anschlussende 2 ist dabei als Einsteckende ausgebildet, in das ein Rohrende eingeführt werden kann. Das Anschlussende 3 ist als Einsteckende ausgebildet, das in ein entsprechend ausgebildetes Rohrende, wie beispielsweise einen Schlauch, eingeführt werden kann.

Zur sicheren Verbindung mit einem Rohrende ist das Anschlussende 3 an seiner Außenseite mit einer Sägezahnstruktur 5 versehen. Das Anschlussende 2 ist an seiner Innenseite mit einem Sprengring 6 und einem Dichtring 7 versehen. An seiner Außenseite weist das Anschlussende 2 eine Rastnase 8 auf. Diese Elemente dienen in bekannter Weise zu einem dichten Anschluss eines Rohrendes im Kupplungselement 1.

Die Anschlussenden 2, 3 sind in dem gezeigten Ausführungsbeispiel in einem 90°-Winkel zueinander angeordnet. Aber auch andere Anordnungen sind denkbar, wobei die Anschlussenden 2, 3 auch parallel zueinander ausgerichtet sein können, wobei sie insbesondere miteinander fluchten.

Im Gehäuse 9 des Kupplungselements 1 ist ein Entlüftungskanal 10 vorgesehen, der in den Verbindungskanal 4 mündet und eine Verbindung des Verbindungskanals 4 zur Umgebung herstellt. Der Entlüftungskanal 10 weist einen Mündungsbereich 11 und einen Führungsbereich 12 auf, wobei der Mündungsbereich 11 dem Verbindungskanal 4 benachbart ist und einen geringeren Durchmesser aufweist als der Führungsbereich 12.

Im Entlüftungskanal 10 ist ein Entlüftungsventil 13 angeordnet, das ein Ventilelement 14 und einen Ventilsitz 15 aufweist. Der Ventilsitz 15 wird bei diesem Ausführungsbeispiel durch eine Stufe gebildet, die sich durch die Durchmesserverringerung des Mündungsbereichs 11 gegenüber dem Führungsbereich 12 ergibt. Das Ventilelement 14 wird bei diesem Ausführungsbeispiel durch die Schwerkraft in Schließrichtung belastet. Dabei ist das Ventilelement 14 im Führungsbereich 12 des Entlüftungskanals 10 geführt, wobei es radial abgestützt ist und axial bezüglich des Entlüftungskanals 10 beweglich ist.

Das Ventilelement 14 weist einen Fortsatz 17 auf, der sich durch den Mündungsbereich 11 bis in den Verbindungskanal 4 erstreckt.

Der Ventilsitz 15 ist trichterförmig ausgebildet, wobei das Ventilelement 14 eine entsprechende Anlagefläche aufweist, so dass eine Flächenberührung bei Anlage des Ventilelements am Ventilsitz erhalten wird. Insbesondere bei unterschiedlichen Materialien von Ventilelement und Gehäuse, wobei insbesondere eines der beiden Materialien weicher sein sollte, wird damit eine sehr hohe Dichtigkeit erreicht.

Ein Durchgang 18 des Entlüftungskanals 10 ist in einer Umfangswand 19 eines hohlzylindrischen Einsatzes 20 ausgebildet, der in einen Stutzen des Gehäuses 9 eingeschraubt ist, wobei der Entlüftungskanal 10 durch den Einsatz verläuft. Im Innenraum des Einsatzes 20 ist eine hygroskopische Dichtung 21 angeordnet, die den Durchgang 18 verdeckt. Die hygroskopische Dichtung 21 ist dabei durch mehrere Dichtscheiben 21a-21f gebildet. Zentrale kreisförmige Öffnungen der Dichtscheiben 21a-21f dienen dabei zur Verlängerung des Entlüftungskanals 10. Das Entlüftungsventil 13 ist in Strömungsrichtung vor dem Durchgang 18 und der hygroskopischen Dichtung 21 angeordnet.

Eine erste Stirnseite 22 des Einsatzes 20 ist mit einer Kappe 23 flüssigkeitsdicht verschlossen. Die Kappe 23 ist dabei auf den Einsatz 20 aufgeschraubt oder mit dem Einsatz verschweißt. Die Kappe 23 ist becherförmig ausgebildet und überdeckt mit einer umlaufenden Wand den Durchgang 18, wodurch eine Verunreinigung des Durchgangs 18 von außen verhindert wird.

An einer zweiten Stirnseite 24 des Einsatzes 20, die in das Gehäuse 9 eingebracht ist, ist ein Dichtring 25 angeordnet, der die Verbindung zwischen dem Einsatz 20 und dem Gehäuse 9 in einer Axialrichtung abdichtet.

Das Gehäuse 9 kann durch Kunststoff oder Metall gebildet sein. Der Einsatz 20 und das Ventilelement 14 können ebenfalls aus Metall oder einem Kunststoff gebildet sein. Die hygroskopische Dichtung kann beispielsweise Zellulose aufweisen.

Bei Anliegen eines Unterdrucks bzw. eines Vakuums im Verbindungskanal 4 wird das Ventilelement 14 angesaugt und legt sich dichtend gegen den Ventilsitz 15, so dass ein dichter Verschluss des Entlüftungskanals 10 erhalten wird. Durch leichten Überdruck ist das Ventilelement 14 vom Ventilsitz 15 abhebbar, so dass eingeschlossene Luft durch den Entlüftungskanal und den Durchgang 18 entweichen kann. Die hygroskopische Dichtung 21 stellt dabei nur ein relativ geringes Hindernis dar. Für möglicherweise dabei mit austretende Flüssigkeit ist die hygroskopische Dichtung 21 jedoch ein starkes Hindernis. Da durch die geringen Luftspalte zwischen dem Ventilelement und dem Führungsbereich bzw. dem Fortsatz im Mündungsbereich nur ein relativ kleiner freier Querschnitt zur Verfügung steht, kann Flüssigkeit auch nur in geringen Mengen bis zur Dichtung 21 gelangen, die ohne weiteres von der hygroskopischen Dichtung 21 aufgefangen werden können. Der Austritt von Flüssigkeit wird durch das Kupplungselement also erfolgreich verhindert, während eine automatische Entlüftung gewährleistet ist. Gleichzeitig ist ein vakuumdichter Verschluss des Entlüftungskanals gewährleistet.

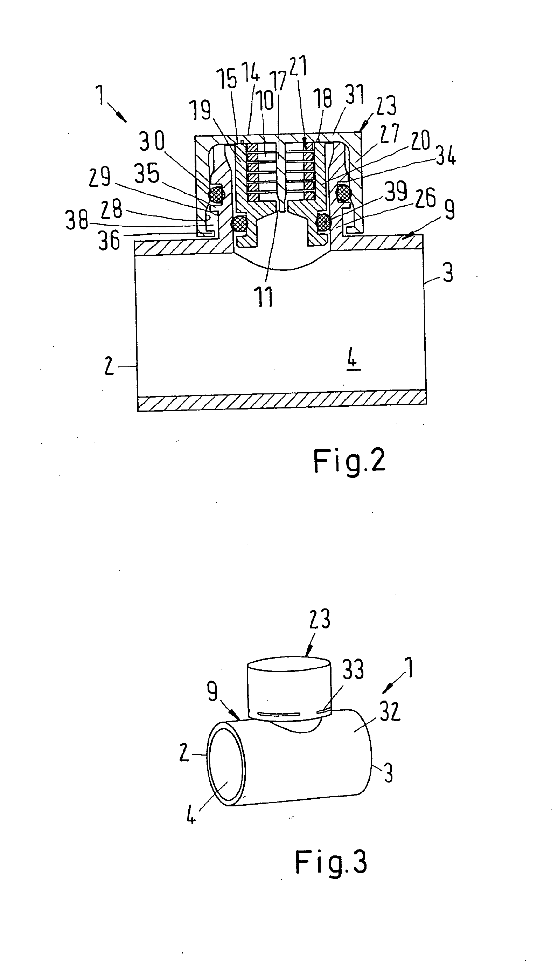

In Fig. 2 ist das Kupplungsventil 1 in einer weiteren bevorzugten Ausführungsform dargestellt. Dabei ist der Einsatz 20 beweglich im Stutzen 26 des Gehäuses 9 geführt. Das Ventilelement 14 und die Kappe 23 sind dabei als ein einziges Bauteil ausgebildet. Eine erste Stirnseite des Stutzens 26 bildet den Ventilsitz 15. Das Entlüftungsventil 13 mit dem Ventilelement 14 und dem Ventilsitz 15 ist also in Reihe hinter der hygroskopischen Dichtung 21 und dem Durchgang 18 angeordnet. Zwischen einer Innenseite 28 der umlaufenden Wand 27 der becherförmigen Kappe 23 und einer Außenwand 29 des Stutzens 26 ist eine Ringdichtung 30 angeordnet. In der gezeigten Schließstellung liegt die Ringdichtung 30 sowohl an der Innenseite 28 als auch an der Außenwand 29 an und dichtet damit zwischen dem Stutzen 26 und der Kappe 21 ab.

Der Durchgang 18 ist an einer Verbindungsstelle zwischen der Stirnseite 22 des Einsatzes 20 und einem Boden 31 der Kappe 23 ausgebildet. Beispielsweise ist dafür zwischen dem Einsatz 20 und der Kappe 23 eine nicht fluiddichte Verbindung vorgesehen.

In Fig. 3 ist das Kupplungselement 1 in dreidimensionaler Ansicht gezeigt, wobei sich das Entlüftungsventil 13 in Schließstellung befindet. Die Kappe 23 bzw. ihre Wand 27 liegt dann fast auf einer äußeren Umhüllung 32 des Verbindungskanals 4 bzw. dem Gehäuse 9 auf. Damit ist optisch leicht erkennbar, dass sich das Entlüftungsventil in Schließstellung befindet.

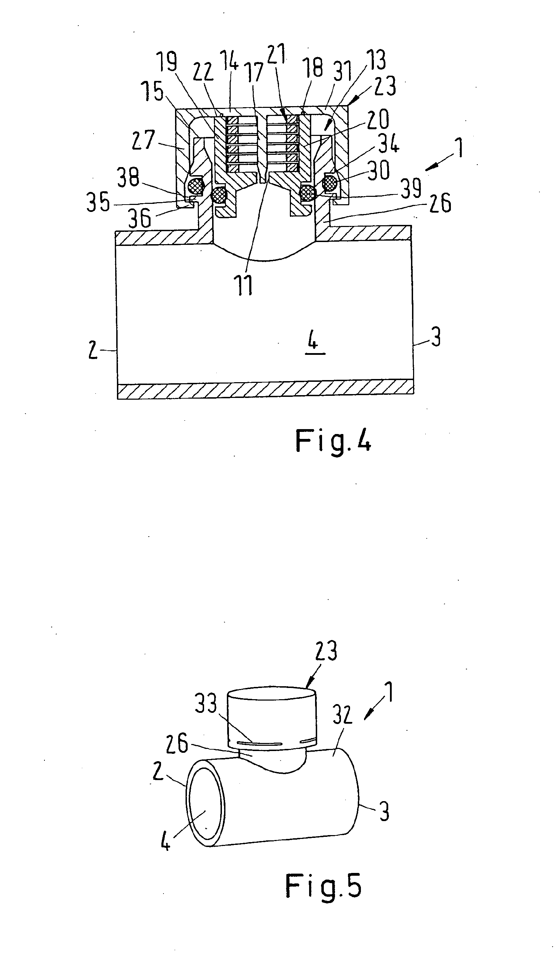

In der Wand 27 sind Schlitze 33 ausgebildet, durch die eine Entlüftung des Entlüftungskanals 10 erfolgen kann. In Fig. 4 ist das Kupplungselement 1 der Ausführungsform gemäß Fig. 3 in Offenstellung dargestellt. Die Kappe 23 und der Einsatz 20, in dem die hygroskopische Dichtung 21 angeordnet ist, sind linear aus dem Gehäuse 9 bzw. aus dem Stutzen 26 herausbewegt worden, so dass zwischen dem Boden 31 der Kappe 23, die das Ventilelement 14 bildet, und dem Ventilsitz 15 ein Durchgangsquerschnitt freigegeben worden ist. Luft, die durch die hygroskopische Dichtung 21 und den Durchgang 18 gelangt, kann so durch den Spalt zwischen Ventilelement 14 und Ventilsitz 15 und die Schlitze 33 nach außen in die Umgebung entweichen. Die Ringdichtung 30 steht dem nicht entgegen, da sie nur an der Außenwand 29 des Stutzens 26 anliegt. Eine Bewegung der Ringdichtung 30 durch die Bewegung der Kappe 23 wird dadurch verhindert, dass die Ringdichtung 30 in einer Ringnut 34 aufgenommen ist.

Zur Begrenzung der linearen Bewegung zwischen der Kappe 23 und dem Gehäuse 9 ist im Stutzen 26 ein Anschlag 35 ausgebildet, der mit entsprechenden Haken 36 der Wand 27 zusammenwirkt.

Die Schlitze 33 sind im Bereich einer Ausnehmung 38 der Innenseite 28 angeordnet, so dass sie in einer Offenstellung zugänglich sind, während sie in der Schließstellung durch die Ringdichtung 30 abgedeckt sind.

Fig. 5 zeigt nun das Kupplungselement 1 in Offenstellung. Die Kappe 23 ist von der äußeren Umhüllung 32 deutlich beabstandet. Damit ist von außen leicht erkennbar, dass der Verbindungskanal 4 noch nicht vollständig entlüftet ist.

## Patentansprüche

1. Kupplungselement zum Verbinden zweier Rohrenden, insbesondere eines Kühlmittelkreislaufs eines Kraftfahrzeugs, mit einem Gehäuse, das ein erstes Anschlussende und ein zweites Anschlussende aufweist, zwischen denen ein Verbindungskanal ausgebildet ist, der einen Entlüftungskanal aufweist, **dadurch gekennzeichnet, dass** ein Durchgang (18) des Entlüftungskanals (10) durch eine hygroskopische Dichtung (21) abgedeckt ist, wobei in Reihe mit der hygroskopischen Dichtung (21) und dem Durchgang (18) ein Entlüftungsventil (13) mit einem Ventilsitz (15) und einem Ventilelement (14) angeordnet ist, das durch einen Druck im Verbindungskanal (4) vom Ventilsitz (15) abhebbar ist.

2. Kupplungselement nach Anspruch 1, **dadurch gekennzeichnet, dass** das Ventilelement (14) in Schließrichtung von einer Kraft belastet ist.

3. Kupplungselement nach einem der Ansprüche 1 bis 2, **dadurch gekennzeichnet, dass** die hygroskopische Dichtung (21) in einem hohlzylindrischen Einsatz (20) angeordnet ist, der in einem Stutzen des Gehäuses (9) angeordnet ist.

4. Kupplungselement nach Anspruch 3, **dadurch gekennzeichnet, dass** eine erste Stirnseite (22) des Einsatzes (20) mit einer Kappe (23) verschlossen ist.

5. Kupplungselement nach einem der Ansprüche 3 oder 4, **dadurch gekennzeichnet, dass** die Austrittsöffnung (18) in einer Umfangswand (19) des Einsatzes (20) angeordnet ist.

6. Kupplungselement nach einem der Ansprüche 1 bis 5, **dadurch gekennzeichnet, dass** die hygroskopische Dichtung (21) mehrere Dichtscheiben (21a-21f) aufweist.

7. Kupplungselement nach einem der Ansprüche 1 bis 6, **dadurch gekennzeichnet, dass** der Entlüftungskanal (10) einen Mündungsbereich (11) in den Verbindungskanal (4) aufweist.

8. Kupplungselement nach einem der Ansprüche 1 bis 7, **dadurch gekennzeichnet, dass** das Ventilelement (14) einen Fortsatz (17) aufweist, der sich durch den Mündungsbereich (11) erstreckt, wobei gegebenenfalls eine Länge des Fortsatzes (17) länger ist als ein Stellweg des Ventilelements (14).

9. Kupplungselement nach einem der Ansprüche 1 bis 8, **dadurch gekennzeichnet, dass** der Entlüftungskanal (10) einen Führungsbereich (12) aufweist, wobei der Mündungsbereich (11) einen geringeren Durchmesser aufweist als der Führungsbereich (12) und der Ventilsitz (15) durch eine Stufe (16) zwischen dem Führungsbereich (12) und dem Mündungsbereich (11) gebildet ist, wobei insbesondere das Ventilelement (14) im Führungsbereich (12) geführt ist.

10. Kupplungselement nach einem der Ansprüche 1 bis 9, **dadurch gekennzeichnet, dass** der Ventilsitz (15) trichterförmig ausgebildet ist, wobei das Ventilelement (14) insbesondere eine konusförmige Anlagefläche aufweist.

11. Kupplungselement nach einem der Ansprüche 3 bis 10, **dadurch gekennzeichnet, dass** eine zweite Stirnseite (24) des Einsatzes (20) einen Anschlag für das Ventilelement (14) bildet.

12. Kupplungselement nach einem der Ansprüche 1 bis 8, **dadurch gekennzeichnet, dass** die Kappe (23) das Ventilelement (14) bildet.

13. Kupplungselement nach Anspruch 12, **dadurch gekennzeichnet, dass** der Einsatz (20) mit der Kappe (23) verbunden ist und linear bewegbar im Gehäuse (9) angeordnet ist, wobei insbesondere zwischen Einsatz (20) und Gehäuse (9) eine Radialdichtung (39) angeordnet ist.

14. Kupplungselement nach einem der Ansprüche 12 oder 13, **dadurch gekennzeichnet, dass** die Kappe (23) becherförmig mit einem Boden (31) und einer umlaufenden Wand (27) ausgebildet ist, wobei insbesondere zwischen einer Außenwand (29) des Stutzens (26) und einer Innenseite (28) der Wand (27) eine Ringdichtung (30) angeordnet ist.

15. Kupplungselement nach einem der Ansprüche 12 bis 14, **dadurch gekennzeichnet, dass** in einer Offenstellung des Ventilelements (14) die Ringdichtung (30) entweder an der Innenseite (28) oder der Außenwand (29) anliegt und in einer Schließstellung sowohl an der Innenseite (28) als auch an der Außenwand (29) anliegt.

16. Kupplungselement nach Anspruch 14 oder 15, **dadurch gekennzeichnet, dass** in der Wand (27) Schlitze (33) ausgebildet sind, die gegebenenfalls in der Schließstellung durch die Ringdichtung (30) abgedichtet sind.
